(19) Europäisches Patentamt
European Patent Office
Office européen des brevets

(11) **EP 2 689 197 B1**

(12) **EUROPEAN PATENT SPECIFICATION**

(45) Date of publication and mention
of the grant of the patent:
**21.08.2019 Bulletin 2019/34**

(21) Application number: **12761021.0**

(22) Date of filing: **21.03.2012**

(51) Int Cl.:
*F24F 5/00* (2006.01)　　*F24F 6/16* (2006.01)
*F25C 3/04* (2006.01)　　*B05B 3/02* (2006.01)
*F24F 6/14* (2006.01)

(86) International application number:
**PCT/AU2012/000289**

(87) International publication number:
**WO 2012/126052 (27.09.2012 Gazette 2012/39)**

(54) **HIGH VELOCITY MIST EVAPORATION**

NEBELVERDAMPFUNG MIT HOHER GESCHWINDIGKEIT

ÉVAPORATION DE BRUME À VITESSE ÉLEVÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.03.2011 AU 2011901005**
**15.09.2011 AU 2011903787**
**02.11.2011 AU 2011904545**
**09.01.2012 AU 2012900069**

(43) Date of publication of application:
**29.01.2014 Bulletin 2014/05**

(73) Proprietor: **Hivap Pty Ltd**
**South Fremantle, Western Australia 6162 (AU)**

(72) Inventor: **ATTEY, Graeme Scott**
**South Fremantle, Western Australia 6162 (AU)**

(74) Representative: **Sandersons**
**D2 Knowledge Gateway**
**Nesfield Road**
**Colchester, Essex CO4 3ZL (GB)**

(56) References cited:
**WO-A1-02/075228　　FR-A1- 2 685 454**
**US-A- 4 278 617　　US-A- 5 003 789**
**US-A- 5 003 789　　US-A- 6 086 053**
**US-A1- 2003 111 746**

## Description

## TECHNICAL FIELD

The present invention relates to evaporative methods, apparatus and systems utilising high velocity mist evaporation, particularly suited to air conditioning, desalination, industrial evaporators and snow making machines.

## BACKGROUND

Evaporative air conditioners are known for low energy consumption and affordability relative to refrigerative air-conditioners, but poor performance in humid environments. They are also not reverse-cycle; they can only cool, not heat. Evaporative coolers are simple in construction and principle, incorporating a circulation fan, wetted pads and a pump mounted in a system 'box' to deliver coolant, usually water, to wet the pads from a reservoir. They do not use refrigerants like CFCs and HCFCs for the cooling method because they do not have a compressor. They simply rely on evaporation of water from the broad surface area of the wetted pads to cool the air. Known art, by way of conventional evaporative air conditioning systems, consists of a fan that draws air through wetted pads in order to evaporate water from the pads, cooling the air, but increasing the humidity of it.

Evaporative coolers are, however, popular because they generally only consume a quarter or less of the energy of a compressor air conditioner as power is only used to operate the fan and water pump.

US 2011/0139005 discloses an air purifier employing a water jet fan system. Water is pumped by an electrically driven water pump and sprayed and scattered by nozzles mounted on the fan. The fan is not driven by the pump motor or any other type of electrical drive or motor. The fan only rotates in the opposite direction to the spray of water through reaction to the water pressure spraying the water. The water spray is used to take particulates out of the air in an air purifying method and not an intentional cooling method. The water jets are direct sprays, and not in the form of a mist because this would not provide sufficient force to drive and rotate the fan.

US 7,160,469 discloses a water sweetening system. Water sweetening is intended to improve the quality of water, such as in reverse osmosis, distillation and electrodialysis systems. This document teaches a system of centrifugal forces to make water droplets fly at high speeds so as to evaporate and leave behind dissolved salts, while the water condenses elsewhere. No nozzles or fans are employed.

US 5,395,483 discloses a distillation apparatus that flashes and boils a solution and condensing the resulting steam. A two disc centrifugal distributor rotates and centrifugally pressurises the solution, which is flashed by spraying and is then vaporised by heated conical surfaces, to later be condensed in a central spiral condenser. No evaporative cooling or mist is obtained.

US 5,439,618 discloses a water atomiser system for cooling, aeration and pollution control. Water sprayed by a jet directly onto blades of a fan which drives rotation of the fan. The rotating fan then atomises the water into fine droplets and forces air through the atomised water. The fan is not motor driven, no misting is created, and any cooling effect, if any, is inefficient.

US 7,033,411 discloses a centrifugal separator for cleaning a gas from solid or liquid particles. The gas is fed into a rotor surrounded by conical separation discs. Centrifugal force is used to separate the gas from the liquid/solid. No fan is used and no water nozzles are used for evaporative cooling.

US 5,003,789 discloses a mist air conditioner for an evaporative cooler and WO 02/075228 A1 discloses a snow cannon having a spraying device for liquids.

In addition to the above, Legionnaires disease is a known problem of evaporative systems, although generally only rarely in large cooling towers and virtually never in domestic systems. However, not all establishments accommodate evaporative coolers; building codes sometimes disallow these for health purposes.

With the aforementioned in view, it is desirable of the present invention to provide an improved method, apparatus or system for effecting evaporation or cooling, such as for air-conditioning.

## SUMMARY OF THE INVENTION

According to the present invention, there is provided an evaporation air conditioning system as claimed in claim 1 and a method of conditioning air by evaporation as claimed in claim 13.

The present invention provides an evaporative method incorporating nozzles located in fan blades of a fan, wherein centrifugal pressure from spinning the fan pressurizes the liquid to form a mist discharge from the nozzles that is rapidly evaporated via a relatively high differential between the nozzle velocity and the air velocity created by the fan.

The technology applies to air conditioning principally but can also apply to other applications including desalination, industrial evaporators and snow making machines.

The present invention may also incorporate a two-stage method to achieve lower temperatures than traditional direct evaporation equipment, such as air conditioners.

In one embodiment the present invention provides an evaporation apparatus including a multi bladed fan operatively connected to a drive means to effect rotation of the fan, at least one flow path to supply the liquid to at least one nozzle on the fan, the at least one nozzle spraying the liquid therefrom through centrifugal pressurisation when the fan is rotating, and velocity differential between the rotating nozzle(s) and airflow created by the fan providing evaporation of the sprayed liquid.

Another form of the present invention provides a corresponding method of evaporation utilizing pressurised liquid flow through nozzles on a fan, the method including rotating a fan; providing liquid under pressure to one or more of the nozzles on the fan; discharging the liquid from the nozzles as a mist; and evaporating the mist via a difference between nozzle velocity arising through rotation of the fan and air velocity created by the fan.

The method may further include rotating a multi bladed fan, providing a conduit along or through one or more of the fan blades to one or more nozzles on one or more of the fan blades to supply liquid to the nozzle(s), centrifugally pressurising the liquid supplied to the nozzle(s) by rotation of the fan, and spraying the liquid as a mist from the nozzle(s) by the centrifugal action and velocity of the nozzle(s) relative to airflow created by the fan.

Distribution of the liquid may be from a central hub of a respective fan through flow paths on or inside the fan blades to the nozzles.

Air may be introduced to the at least one fan via inlet vanes disposed circumferentially around the at least one fan.

Incoming airflow to the fan(s) may be guided (such as by the inlet vanes) in a direction contra to a direction of rotation of the fan(s).

The present invention rapidly evaporates mist discharged from the nozzle(s) via a relatively high differential between the nozzle velocity and the air velocity.

Preferably each fan blade includes at least one of the nozzles. Single or multiple nozzles may be provided on each blade. Alternatively, every other blade in a fan with an even number of blades (4,6587..) may include one or more of the nozzles.

Advantageously, the fan blades include the mist emitting nozzle(s) spun to induce centrifugal fluid pressure in the nozzles to create a fine mist, resulting in rapid evaporation via the high velocity mist exit speed into a refresh air stream.

Preferably the at least one nozzle is/are located at or adjacent a fan blade tip. In this way, the relatively high tip speed of the fan with respect to the rest of the rotating fan ensures the velocity of the nozzle(s) is therefore high; whereas, the actual refresh airflow velocity induced by the fan blades is relatively low to save energy.

It is important to comprehend that the velocity of the blade tips of a typical fan, particularly a vane axial fan, is generally about seven times (7x) faster than the actual airflow induced by the fan. This core principle allows embodiments of the present invention to achieve high evaporation rates.

One or more embodiments of the present invention relates to an evaporation method incorporating the spinning of nozzles, such that mist discharged from the nozzles is rapidly evaporated via pressure differential between high nozzle velocity relative to slower air velocity.

Mist emitting nozzles are mounted at or towards the tips of fan blades such that the spinning fan induces centrifugal fluid pressure in the nozzles to create a fine mist through the nozzles, resulting in rapid evaporation via the high velocity mist exit speed into a refresh air stream.

The velocity is achieved by the high nozzle velocity at the periphery of the fan blades, whereas the actual refresh airflow velocity induced by the blades is relatively low to save energy.

Although many fan types can be used in the present invention, it has been found that the vane axial fan type offers an excellent basis from which to extract high performance. Other fan types are envisaged to fall within the scope of the present invention.

Vane axial fans offer some of the highest efficiencies of all fan types for moving air. In addition, the shape and configuration of vane axial fans, i.e. relatively flat compared to their diameter, offers an ideal layout for use in the present invention.

The drawings and description in this specification depict embodiments of the present invention utilising vane axial fans. In particular, the vane axial fan configuration allows for guided air inlet vanes to direct refresh/incoming air over the nozzle outlets and onto the blades such that the airflow is contra to the blade/nozzle direction. This helps to maximize velocity differential between the air flow speed and the nozzle speed, and therefore maximizes evaporation of the mist ejected from the nozzles i.e. the blade direction and refresh/incoming air are in opposite directions and yet the air flow rate of the fan is still also maximized.

Advantageously, it has been found that angled inlet vanes help to maximize overall performance of the evaporative device, and actually also slightly increase vane axial fan performance.

Compared to a traditional vane axial fan where incoming air and outgoing air follow a generally straight through flow (i.e. following the fan axis), guided inlet vanes of one or more embodiments of the present invention induce the incoming air from the side (perpendicular to the vane axial fan rotation axis) and direct that air in, around and onto the blades, to then follow a traditional axial flow outlet path and away from the axial fan.

It has been found that the guided side vanes of embodiments of the present invention increase fan airflow rates by about 7% over traditional straight-through vane axial fan performance. This not only improves fan efficiency but also provides the ability to mount vane axial fans flush on a wall. This has not been possible prior to the present invention because vane axial fans (and axial fans in general) normally require mounting a significant distance out from a wall to allow a straight-in (axial flow) air flow entry. Consequently, guided side vanes directing air to vane axial fans open market opportunities and applications for flush wall-mounted fans that did not previously exist.

Another embodiment of the present invention provides a central fan hub with the nozzles emitting a mist out from the edge of the fan hub into the fan blades' air streams (the blades extending out from the central fan or hub).

Spinning nozzles of the present invention may be located on a fan hub supporting fan blades or near the end of the blades themselves.

In the latter instance, liquid may be distributed out via centrifugal force from the central hub through flow paths in the inside of the fan blades to the nozzles located at or near the ends of the fan blades.

The velocity of the blades near the tips is high (typically about 7 times the velocity of the induced airstream) which results in rapid evaporation of the liquid on ejection from the nozzles as a fine mist, created due to the centrifugal pressure of the spinning fan blades.

The liquid may enter the fan from the front (non-motor side) or the rear (motor side) via a flow path tube inside the motor shaft. The latter option (fluid entry from the rear or motor side) has advantages of not requiring alignment of the inlet tube and a neater appearance.

Embodiments may incorporate liquid supply via the motor shaft, with fluid flow entering the motor shaft inlet tube hole, travelling through the hollow shaft to the motor shaft fluid dispersal holes, through the fan hub fluid dispersal chamber, distributing out through the radial fluid dispersion tubes within the fan blades and then out through the nozzles located in the region of the blade tips. This represents an extremely effective system that to all intents and purposes appears as a conventional fan.

The nozzles can be positioned towards the blade tips or far enough out on the disk to be effectively in the blade tip radius area. Centrifugal pressure and nozzle velocity are higher the further out along the radius from the rotation axis that they are positioned (for a given RPM). Therefore, the smaller the droplet size and higher the evaporation rate. The nozzles are preferably positioned towards the periphery of the disc, hub or fan blades, such as in the outer half of the radius of the fan from the central axis.

In summary, performance basically relies on nozzle velocity. If revolutions per minute (rpm) increase, nozzle velocity increases, which in turn increases centrifugal pressure. Higher nozzle pressure in turn creates a finer mist which, in combination with the higher velocity increases evaporation.

Advantages of the present invention for, in particular, air conditioning :

- Not as dependent on RH levels, therefore better performance in humid environments.
- Method fluid is not restricted to clean freshwater but can also be saltwater or even wastewater.
- Much less energy than compressor air conditioning systems.
- Smaller, lighter, simpler and cheaper than traditional evaporative systems.
- No pads to foul or change.

- No large wetted-pad roof boxes required.
- More easily located in cooler, more efficient locations to improve efficiency even more.
- No pump·required.
- Lower air flow rates are required compared to traditional wetted pad evaporative systems, resulting in lower energy consumption.

## BRIEF DESCRIPTION OF THE DRAWINGS

In order that the invention may be more readily understood and put into practical effect, reference will now be made to the accompanying drawings in which:

**Figure 1** shows an evaporation apparatus according to an embodiment of the present invention.

**Figure 2** shows a section in close up of the embodiment shown in Figure 1.

**Figure 3** shows a section of the evaporation apparatus of Figures 1 and 2 with cowling removed and showing the side air flow directing vanes.

**Figure 4a** shows a front view of part of a fan showing a fan hub with central liquid supply tube and seal, and liquid distribution tubes radiating from the central hub to the bases of the blades according to an embodiment of the present invention.

**Figure 4b** shows part of an embodiment of the present invention with a cover over a hollow fan hub chamber to supply liquid to the feed tubes.

**Figure 5a** shows the embodiment of Figure 4a with the liquid supply tube and seal removed.

**Figure 5b** shows the embodiment of Figure 4b with hub cover removed to show the hub chamber and openings leading to flowpaths through the blades or to the periphery of the hub.

**Figure 6** shows a part sectional view of a fan and motor assembly with rear liquid supply through the motor spindle to the fan blades according to an embodiment of the present invention.

**Figure 7** shows an evaporative apparatus with nozzles mounted at the edge of the central spinning fan hub with mist ejection from the nozzles into the turbulent airstream wake behind the fan blades, and side entry air flow directing vanes according to a further embodiment of the present invention.

**Figure 8** shows an alternative embodiment of the present invention as a stacked system with multiple spinning discs/hubs/nozzles.

**Figure 9** shows a dual stage evaporation air conditioning system according to an embodiment of the present invention.

**Figure 10** depicts an embodiment of a system of the present invention with cowling removed to show the arrangement of inlet vanes.

## DESCRIPTION OF PREFERRED EMBODIMENTS

It is firstly worthwhile giving some general background to the concept behind the present invention.

A spinning disk is an efficient mechanical device since it is essentially a wheel. The power required to spin an atomizing disk is low compared to having to use pumps to pressurize the Reverse Osmosis (RO) elements in a conventional desalination system. In a desalination system/method of the present invention, centrifugal force induces fluid pressure in nozzles to create fine seawater droplets of mist (typically 10-50 micron). Water is rapidly evaporated from the salt in each droplet by the high velocity exit 'airstream' then can be condensed into freshwater by conventional means. The pressure at the periphery of the disc/hub can be determined by the known equation for centrifuges, the pressure being described by the following equation:

$$P = \rho.\omega^2.R^2/2$$

Where

$\rho$ = density of the fluid
$\omega$ = angular velocity at the periphery
R = radius

The only losses in the spinning disk are in the bearings & wind resistance, both of which are negligible. In other words, it is very close to 100% efficient to create the required pressure via the centrifugal means of spinning a disk. The methods of spinning the discs/hub to obtain the required centrifugal-induced fluid pressure in the nozzles can be via electricity (AC mains or DC battery) or direct mechanical drives from wind or wave sources.

It is generally understood that "saturated" air is holding as much water vapour as it can and that warm air holds more water vapour than cool air. This implies that once the air has reached saturation it won't "accept" more water by evaporation. This is not strictly correct, as it is possible to continue evaporation even when the air is fully saturated in a condition referred to as super-saturation.

Smaller water droplets have larger surface area relative to volume so it is then easier for one of these water molecules to escape the intermolecular forces trying to keep it in the droplet. Molecules in motion have more energy than those at rest, and so the stronger the flow of air, the greater the evaporating power of the air molecules. The particles of a liquid attract each other. So when a particle leaves the surface, there is a force from all the surface particles trying to pull it back. However, if it is travelling at high velocity it can escape from this force. Particles with a high kinetic energy can escape - or evaporate.

Using heated air to, in turn, heat water droplets to induce evaporation is a highly inefficient heat transfer method. This method requires the heated air molecules to transfer heat to the droplets to induce water molecules to escape the intermolecular forces trying to keep them in the droplet.

The present invention aims to induce the water molecules to escape using high velocity and turbulence to rip the droplets apart, inducing evaporation.

Given the above basic principles, it is apparent that heat is not the only option available to induce evaporation and that the underlying conditions shown on typical psychrometric charts are not restrictive to evaporation rates under conditions other than 'normal.' In other words, it is possible to supersaturate the air considerably under certain conditions. The conditions utilized by the present invention induce super-saturation and very high levels of evaporation are created via turbulent, high velocity mist exit speed from the nozzles. The large velocity differential between the nozzles and airflow is able to create such conditions in a simple and highly efficient manner.

A summary of the spinning nozzle method of a particular embodiment of the present invention is as follows:

Air feeds into the cowling that houses the fan via the air inlets and the method fluid (seawater, wastewater or freshwater etc) feeds into the fluid inlet at the core/axis of the fan disk, hub or motor shaft.

The disk/hub spins at high RPM, inducing centrifugal fluid pressure to create a fine mist of droplets out through nozzles spinning at high velocity at the periphery of the disk/hub or near the tips of fan blades extending out from the central disk/hub. This is a highly efficient means of spraying the mist because the mist ejects into a high velocity 'airstream' without having to use power to actually create a high velocity airstream as such. That is, although power is used to rotate the fan to create an airstream, that airstream does not need to be high velocity. It is the differential between the hub/blade speed at which the mist is sprayed and the air flow over the blades that effectively results in a high velocity airstream.

In addition to the nozzle speed, a separate contra-flow airflow to refresh air over the nozzles is created either by blades mounted on the disk(s) or via a separate fan that feeds a multitude of disks.

The high nozzle velocity mist discharge in combination with air turbulence evaporates the majority of the mist droplets very soon after ejecting from the nozzles and the evaporated freshwater exits as cooled vapour.

Conventional evaporative air conditioning systems are generally almost all single stage. In other words, there is only one cooling stage to the cycle so the single air stream passes through the wet channels of the pads only once. It is therefore not possible to reach a temperature lower than 'wet bulb'. However, as a rule of thumb, pre-cooling the air ten degrees will cause a three degree decrease in the output temperatures of an evaporative air cooler.

To make use of this effect, embodiments of the present invention can utilize a two stage cooling method.

Using two evaporative systems of the present invention and two heat exchangers, lower cooling temperatures can be reached than with single stage evaporative systems, enabling the present invention to better compete with compressor cooling systems. In addition, this two stage option does not place moist air into the building like traditional evaporative systems; the cooled air does not contain extra moisture as higher humidity air is expelled. This means that embodiments of the present invention exchange the inside air with fresh, cooled air; something that compressor systems do not do.

Evaporation using an embodiment of the present invention also provides salt-water or grey-water evaporative air-conditioning. Because of the very high evaporation rates, significant temperature drops and heat pumping take place even using seawater or grey-water as the method fluid, not requiring clean fresh water.

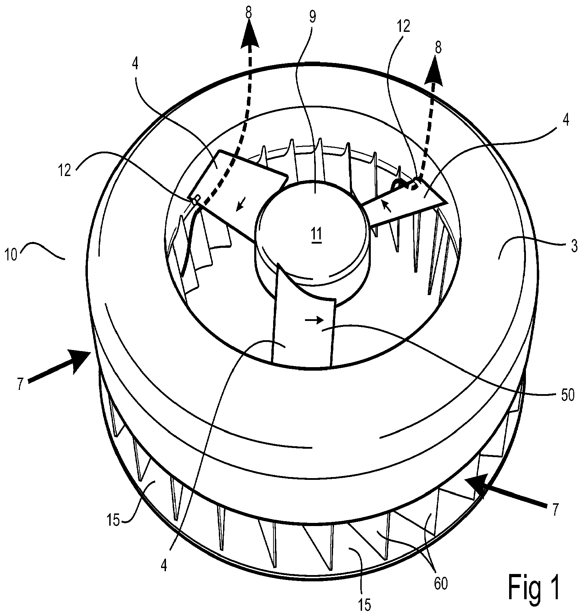

Figure 1 is an example of an embodiment of an evaporation system according to an embodiment of the present invention.

An evaporation system 10 includes a fan 9 with a hub 11. In this embodiment a vane axial fan is used. A cowling 3 partially covers air inlet vents 15 disposed around a periphery of the system. Vanes 60 are angled with respect to a radial direction from the centre of the system to define the air inlet vents. Liquid is supplied to the fan via a liquid supply system (not shown) from the rear. Liquid flows in a flow path into the fan, through the fan blades 4 themselves and ejects through nozzles 12 in the fan blade tip regions. Fan blade tip regions can be at or near the blade tips. However, it will be appreciated that the nozzles need only to be disposed towards the tip regions of the blades. Pressure in the liquid at the nozzles prior to ejection increases the further the nozzles are disposed to the tip regions, for a given rpm. The pressure increases due to increase in centrifugal forces towards the tips of the blades, and blade tip rotation velocity is higher the further along the radius from the rotation axis. Thus, smaller droplets and higher evaporation rates can be achieved. The spinning nozzles 12 located near the fan blade 4 tips, spinning around inside the cowling 3 with the liquid distributed out internally via centrifugal force from within the central hub 11 through fluid flow paths located out through the inside of the fan blades 4. Fan blades 4, blade spinning direction 50, warm air-in direction 7 guided by inlet vanes 60 and cool air-out direction 8 following evaporation of the mist emitted from the nozzles 12.

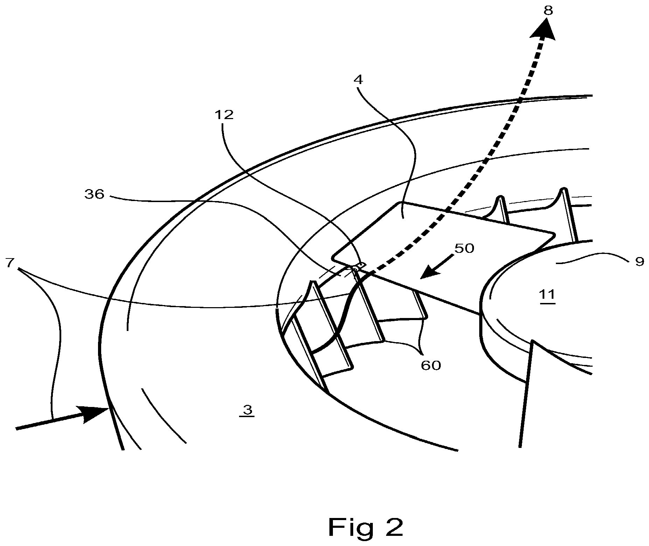

Figure 2 is a close up of a section of the embodiment of the system shown and described in Figure 1. The liquid flows into the rear of the fan through the motor spindle/shaft and out via the central hub 11 through hollows in the inside of the fan blades 4 and is then ejected through nozzles 12 located near the fan blade tips to become a mist 36, blade spinning direction 50, warm air-in direction 7 guided by inlet vanes 60 and cool air-out direction 8 following rapid evaporation of the mist 36 from the nozzles 12.

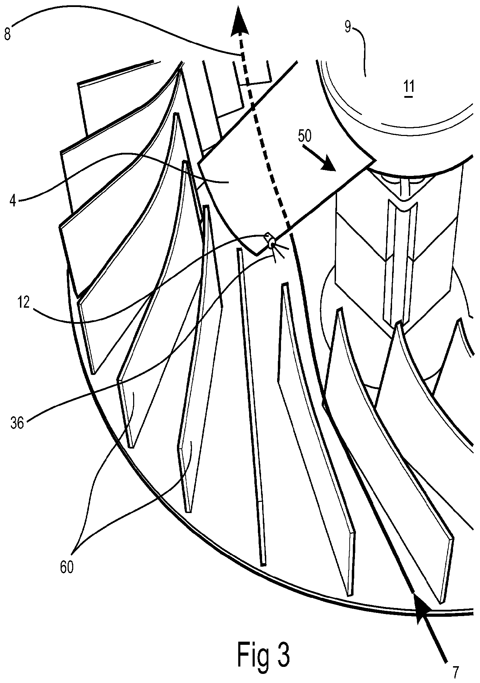

Figure 3 is an example of an embodiment of the present invention shown and described in Figures 1 and 2. The cowling has been removed to show some of the inlet vanes 60. Again, the liquid flows in from the rear through the motor shaft and is dispersed out through the central hub 11 through flow paths or conduits in the inside of the fan blades 4 and then ejected through nozzles 12 located near the fan blade tips to become a mist 36. Also shown are the direction of rotation (blade spinning direction) 50, warm air-in direction 7 guided by inlet vanes 60 and cool air-out direction 8 following rapid evaporation of the mist 36 from the nozzles 12.

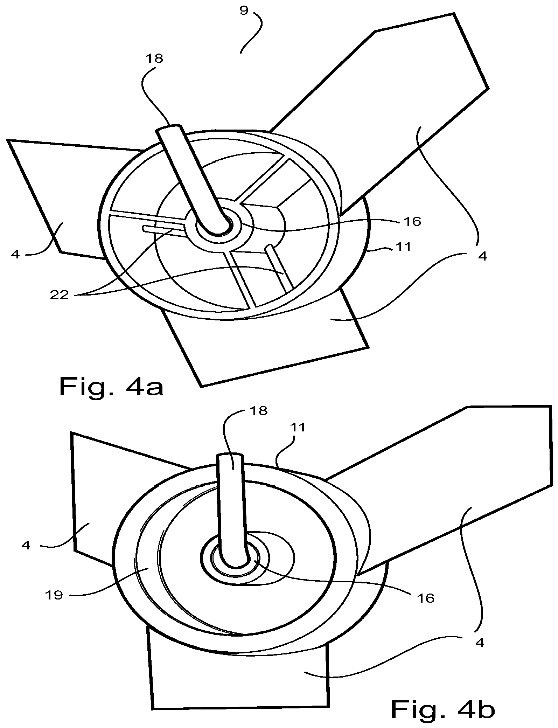

Figure 4a is another embodiment of the present invention compared to that in Figures 1, 2 and 3. Figure 4a shows the front supply of liquid to the fan 9 via a supply tube 18 entering the central hub 11 of the fan 9 through the central hub flange. The liquid flows through the fan blades themselves and ejects through nozzles in the fan blade tip regions. The liquid is distributed out from the front-side inlet tube 18 via centrifugal force through the inner section of the three-blade fan and central hub 11 through a hollow central chamber in the flange to radial liquid dispersion tubes 22 leading to the hollow internal fluid paths inside the fan blades 4 and out to the nozzles located in the region of the blade tips.

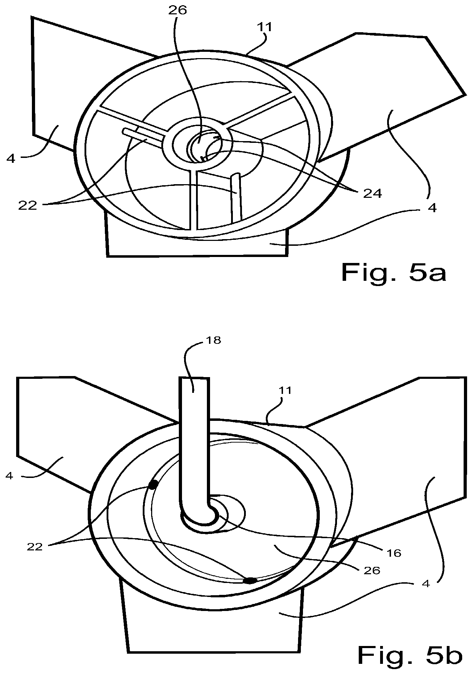

Figure 5a is a similar view to that of Figure 4a but with the front inlet tube 18 and the rotary liquid seal 16 removed to show the fluid dispersal chamber 26. After flowing through the inlet tube 18, liquid enters the fluid dispersal chamber 26 and distributes out through the three radial liquid dispersion holes 24 into the liquid radial dispersion tubes 22 inside the three fan blades 4 and out to the nozzles located in the region of the blade tips. Also shown is the hub 11 and three fan blades 4.

Figure 4b shows an alternate construction technique to Figure 4a, featuring a larger internal fluid dispersal chamber (without dispersal tubes 22 as in Figure 4a). It therefore includes a two-part hub 11 with a hub cover 19 in place, rotary seal 16 which prevents the liquid escaping from the front of the rotating hub, fluid inlet tube 18 and blades 4.

Figure 5b shows the same view as Figure 4b but with the hub cover 19 removed to show the rotary seal 16, internal hub chamber 26 with the open holes of the blade liquid dispersion tubes 22 that become flow-paths within the blades 4.

In use, as the hub/fan rotates, liquid supplied to the hub becomes pressurised by centrifugal force at nozzles on the blade tip regions and/or hub periphery, to thereby spray as a mist out of the nozzles and into the airstream created by the rotating fan.

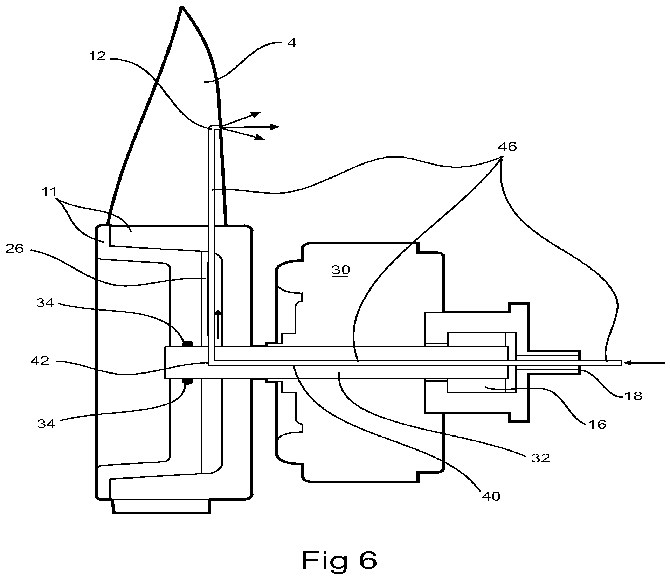

Figure 6 shows another example of the present invention. It depicts a close cross-section representational view of a 'split-half or 'cutaway' drawing of a system of the present invention incorporating a fluid inlet feed via the motor shaft/spindle 32. It shows the total flow path 46 though the system (of one example blade), being the inlet tube 18, motor shaft centre hole 40, motor shaft 32, motor shaft fluid dispersal holes 42, fluid dispersal chamber 26, distributing out through the radial fluid dispersion tubes inside the fan blades 4 and out through the nozzles 12 located in the region of the blade tips. Also shown is the two-part hub 11, motor 30, static O-Ring seals 34 and rotary fluid seal 16.

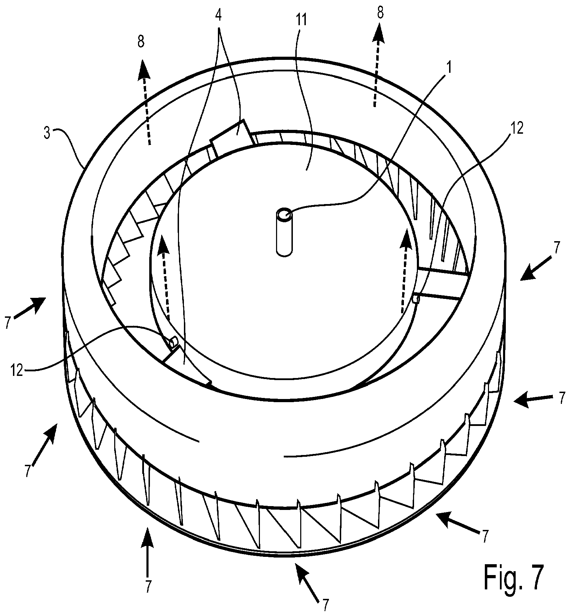

Figure 7 shows an evaporative system of the present invention with nozzles 12 mounted at the edge of the central spinning disc/hub 11 with mist ejection from the nozzles into the turbulent airstream wake behind the blades 4. It shows a typical representational view of a central disk/hub 11, front-side (non-motor shaft side) feedwater inlet point 1, nozzles 12 mounted at the periphery of the spinning disk/hub 11 and behind the blades 4, such that mist is emitted from the nozzles 12 when the disk is spun (anti-clockwise in this embodiment), air inlets 7, cowling 3, depiction of the airflow path through the system beginning with warm air in through the side inlets 7 and finishing with cool air vertically out 8.

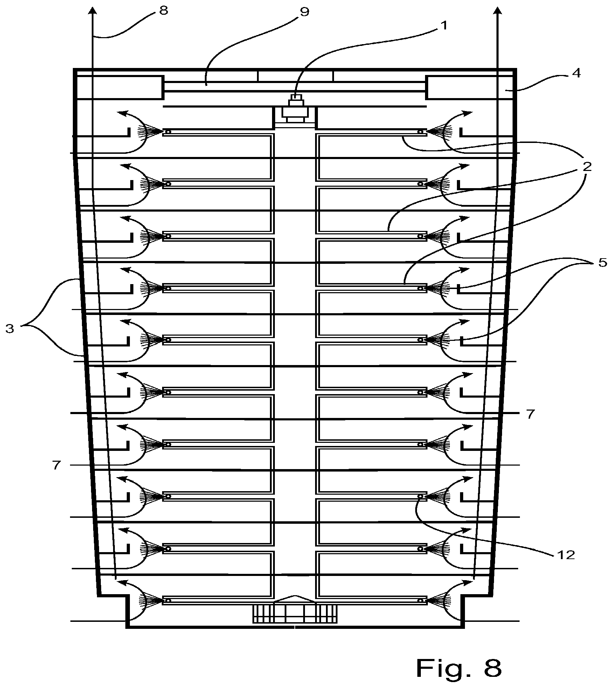

Figure 8 is a further example of an embodiment of the present invention, being a stacked system with multiple spinning disks/nozzles (as per Figure 7) and only one fan 9. It shows an example cross-section view of a bank of ten horizontally oriented discs/hubs 2 (without blades), water feed inlet point 1, radial fluid dispersion via the central column and out through the disks to nozzles 12 mounted at the periphery of each of the ten disks, single independent fan 9 with blades 4 supplying refresh air to the ten disks, spray mist 5 from nozzles, air inlets 7, disks cowling 3, depiction of the airflow path through the system beginning with air inlets 7 and finishing with air out 8.

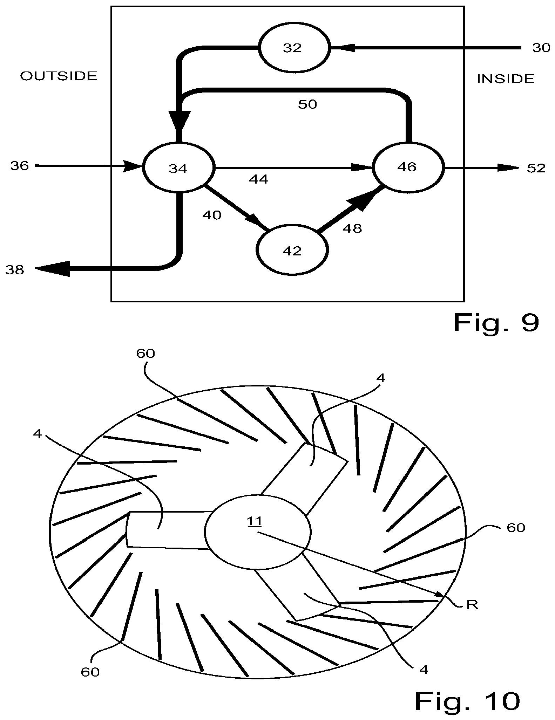

Figure 9 is an example of a dual-stage method and system of the present invention which could utilize two of any of the evaporation stages described in Figures 1-8. Figure 9 diagrammatically depicts the optional two-stage evaporator and two-stage heat exchanger (HE 1 and HE 2) arrangement that can create higher temperature differences than single stage evaporator systems, in addition to not humidifying interior air.

The two-stage method of the present invention, as shown in Figure 9, works as follows. Expelled inside air 30 enters the first evaporation stage 32, lowering the temperature and the cooled moist air enters a first separated flow air-to-air heat exchanger 34. Fresh dry air 36 from the outside also enters the air-to-air heat exchanger 34 and flows contra-flow but both air streams do not actually mix; they are separated. Moist air from this stage 34 is expelled 38 outside and the cooled dry air from the first heat exchange stage then splits into two flows; the first 40 being to the 2nd evaporation stage 42 and the second 44 being the 2nd stage air-to-air heat exchanger 46. The evaporation stage split is therefore pre-cooled dry air to the 2nd stage evaporation stage, allowing lower temperatures to be reached as previously mentioned. The cool, moist air 48 from the 2nd evaporation stage then flows to the 2nd stage air-to-air heat exchanger 46, further cooling the already cooled dry air which then flows to the inside. The 2nd stage cooled moist air 50 then flows back to the first stage air-to-air heat exchanger 34 to further assist 1st stage cooling before being expelled outside. Fresh, dry, cooled air 52 flows to the inside of the building/room from the 2nd stage heat exchanger 46.

Figure 10 shows an arrangement of the inlet vanes 60 angled with respect to the radial direction R from the central hub 11 of the fan(s). These inlet vanes direct air in an opposite direction to the anti-clockwise rotation of the fan(s), thereby helping to increase velocity differential between the rotating nozzles and the airflow.

Nozzles on the leading edge of blades can be used; however, it has been found beneficial to provide the nozzles at the trailing edges of the blades or downstream of the blades relative to the direction of fan rotation.

Various modifications may be made in details of design and construction without departing from the scope of the present invention which is defined by the appending claims.

## Claims

1. An evaporation air conditioning system (10) for cooling air, the system including at least one fan (9) having blades (4) and operatively connected to drive means (32) to effect fan rotation, at least one flow path (46) to supply the liquid under pressure to at least one nozzle (12), the at least one nozzle discharging the liquid as a mist (36) into a refresh airflow created by the blades during rotation (50) of the at least one fan,
the at least one nozzle (12) being provided at a trailing edge of one or more of the blades (4) of the fan (9) or downstream of a trailing edge of one or more of the blades (4) of the fan (9) relative to the direction of fan rotation, and velocity differential between the mist (36) from the rotating nozzle(s) (12) relative to the refresh airflow created by the blades of the at least one fan (9) providing evaporation of the mist (36) of the liquid.

2. A system according to claim 1, wherein the at least one fan includes a vane axial fan.

3. A system according to claim 1 or 2, wherein the nozzles are provided on the blades (4) of the at least one fan.

4. A system according to any one of claims 1 to 3, wherein at least one of the nozzles is located at or adjacent a respective fan blade tip and/or on the fan blades in an outer half of a radius from a rotation axis of the fan(s) to an outer peripheral edge of the fan(s).

5. A system according to any one of the preceding claims, including air inlet vanes (60) to direct refresh/incoming air over respective outlets of the nozzles.

6. A system according to claim 5, the inlet vanes disposed circumferentially with respect to the fan(s).

7. A system according to any one of the preceding claims, the at least one fan including a central hub or disc (11) supporting at least one of said nozzles to emit a mist (36) out from the edge of the hub or disc when the at least one fan rotates.

8. A system according to claim 5 or 6, wherein at least some of the inlet vanes (60) are angled away from a radial direction from a central axis of the fan(s) to direct air flow in a direction contra to a rotation direction of the fan(s).

9. A system according to any one of the preceding claims, including flow paths (18,22) on or inside the fan blades to distribute the liquid to the nozzles.

10. A system according to any one of the preceding claims, including a liquid supply means entering a hub of the at least one fan from a front, non driven side of the fan(s).

11. A system according to any one of claims 1 to 9, including a liquid supply means entering a hub of the at least one fan from a rear, driven side, via a flow path inside a shaft or spindle.

12. A system according to claim 11, including liquid supply means entering via a hollow motor shaft (40) to supply the liquid to fluid dispersal holes (42) to a fan hub fluid dispersal chamber (26), distributing out through radial fluid dispersion conduits within the fan blades and then out through the nozzles.

13. A method of conditioning air by evaporation by utilizing pressurised liquid flow through nozzles (12), the method including

    a) rotating a fan (9) having blades (4) with at least one nozzle (12) provided at a trailing edge of one or more of the blades (4) of the fan (9) or downstream of a trailing edge of one or more of the blades (4) of the fan (9) relative to the direction of fan rotation;
    b) providing liquid under pressure to one or more of the nozzles (12);
    c) discharging the liquid from the nozzles as a mist (36) into a refresh airflow created by the blades (4) of the at least one fan (9); and
    d) evaporating the mist (36) via a difference between velocity of the mist discharged from the one or more nozzles during rotation of the fan (9) and air velocity of the refresh airflow created by the blades (4) of the fan (9).

14. A method as claimed in claim 13, including:

    a) providing a conduit along or through one or more of the fan blades to one or more nozzles on one or more of the fan blades to supply liquid to the nozzle(s);
    b) centrifugally pressurising the liquid supplied to the nozzle(s) by rotation of the fan;
    c) spraying the liquid as a mist from the nozzle(s) by the centrifugal action and velocity of the nozzle(s) relative to airflow created by the fan.

15. A method according to claim 14, including distributing the liquid from a central hub of a respective fan through flow paths on or inside the fan blades to the nozzles.

16. A method according to any one of claims 13 to 15, including introducing air to the at least one fan via inlet vanes disposed circumferentially around the at least one fan.

17. A method according to claim 16, including guiding incoming airflow to the fan(s) in a direction contra to a direction of rotation of the fan(s).

**Patentansprüche**

1. Verdunstungsklimaanlage (10) zum Kühlen von Luft, wobei die Anlage mindestens einen Ventilator (9), der Flügel (4) aufweist und funktionsfähig mit einem Antriebsmittel (32) verbunden ist, um eine Ventilatordrehung zu bewirken, und mindestens einen Strömungsweg (46) umfasst, um die unter Druck stehende Flüssigkeit mindestens einer Düse (12) zuzuführen, wobei die mindestens eine Düse die Flüssigkeit als einen Nebel (36) in einen Auffrischungsluftstrom abgibt, der von den Flügeln während einer Drehung (50) des mindestens einen Ventilators erzeugt wird, wobei die mindestens eine Düse (12) an einer Hinterkante von einem oder mehreren der Flügel (4) des Ventilators (9) oder nachgelagert zu einer Hinterkante von einem oder mehreren der Flügel (4) des Ventilators (9) in Bezug auf die Richtung einer Ventilatordrehung vorgesehen ist und eine Geschwindigkeitsdifferenz zwischen dem Nebel (36) von der bzw. den sich drehenden Düsen (12) in Bezug auf den Auffrischungsluftstrom, der von den Flügeln des mindestens einen Ventilators (9) erzeugt wird, eine Verdunstung des Nebels (36) der Flüssigkeit bereitstellt.

2. System nach Anspruch 2, wobei der mindestens eine Ventilator einen Schaufel-Axialventilator umfasst.

**3.** System nach Anspruch 1 oder 2, wobei die Düsen auf den Flügeln (4) des mindestens einen Ventilators vorgesehen sind.

**4.** System nach einem der Ansprüche 1 bis 3, wobei mindestens eine der Düsen sich an oder angrenzend an einer jeweiligen Ventilatorflügelspitze und/oder auf den Ventilatorflügeln in einer äußeren Hälfte eines Radius von einer Drehachse des bzw. der Ventilatoren zu einer äußeren Umfangskante des bzw. der Ventilatoren befindet.

**5.** System nach einem der vorhergehenden Ansprüche, umfassend Lufteintrittsschaufeln (60), um Auffrischungsluft/einströmende Luft über jeweilige Austritte der Düsen zu leiten.

**6.** System nach Anspruch 5, wobei die Eintrittsschaufeln in Bezug auf den bzw. die Ventilatoren umlaufend angeordnet sind.

**7.** System nach einem der vorhergehenden Ansprüche, wobei der mindestens eine Ventilator eine zentrale Nabe oder Scheibe (11) umfasst, die mindestens eine der Düsen trägt, um einen Nebel (36) von der Kante der Nabe oder Scheibe auszustoßen, wenn der mindestens eine Ventilator sich dreht.

**8.** System nach Anspruch 5 oder 6, wobei mindestens einige der Eintrittsschaufeln (60) von einer radialen Richtung von einer zentralen Achse des bzw. der Ventilatoren weg abgewinkelt sind, um einen Luftstrom in eine Richtung gegen eine Drehrichtung des bzw. der Ventilatoren zu leiten.

**9.** System nach einem der vorhergehenden Ansprüche, umfassend Strömungswege (18, 22) auf oder im Inneren der Ventilatorflügel, um die Flüssigkeit zu den Düsen zu verteilen.

**10.** System nach einem der vorhergehenden Ansprüche, umfassend ein Flüssigkeitszufuhrmittel, das in eine Nabe des mindestens einen Ventilators von einer vorderen, nicht angetriebenen Seite des bzw. der Ventilatoren eindringt.

**11.** System nach einem der Ansprüche 1 bis 9, umfassend ein Flüssigkeitszufuhrmittel, das in eine Nabe des mindestens einen Ventilators von einer hinteren, angetriebenen Seite mittels eines Strömungswegs im Inneren einer Welle oder Spindel eindringt.

**12.** System nach Anspruch 11, umfassend ein Flüssigkeitszufuhrmittel, das mittels einer Motorhohlwelle (40) eindringt, um die Flüssigkeit zu Fluidverbreitungslöchern (42) zu einer Ventilatornabenfluidverbreitungskammer (26) zuzuführen, wobei sie durch radiale Fluidverbreitungsleitungen innerhalb der Ventilatorflügel und dann durch die Düsen heraus verteilt wird.

**13.** Verfahren zur Luftklimatisierung durch Verdunstung durch Nutzen eines Druckflüssigkeitsstroms durch Düsen (12), wobei das Verfahren umfasst:

a) Drehen eines Ventilators (9), der Flügel (4) mit mindestens einer Düse (12) aufweist, die an einer Hinterkante von einem oder mehreren der Flügel (4) des Ventilators (9) oder nachgelagert zu einer Hinterkante von einem oder mehreren der Flügel (4) des Ventilators (9) in Bezug auf die Richtung einer Ventilatordrehung vorgesehen ist;
b) Bereitstellen von unter Druck stehender Flüssigkeit zu einer oder mehreren der Düsen (12);
c) Abgeben der Flüssigkeit aus den Düsen als einen Nebel (36) in einen Auffrischungsluftstrom, der von den Flügeln (4) des mindestens einen Ventilators (9) erzeugt wird; und
d) Verdunsten des Nebels (36) mittels einer Differenz zwischen einer Geschwindigkeit des Nebels, der aus der einen oder den mehreren Düsen während einer Drehung des Ventilators (9) abgegeben wird, und einer Luftgeschwindigkeit des Auffrischungsluftstroms, der von den Flügeln (4) des Ventilators (9) erzeugt wird.

**14.** Verfahren nach Anspruch 13, umfassend:

a) Bereitstellen einer Leitung entlang oder durch einen oder mehrere der Ventilatorflügel zu einer oder mehreren Düsen auf einem oder mehreren der Ventilatorflügel, um der bzw. den Düsen Flüssigkeit zuzuführen;
b) zentrifugales Druckbeaufschlagen der Flüssigkeit, die der bzw. den Düsen zugeführt wird, durch eine Drehung des Ventilators;
c) Sprühen der Flüssigkeit als ein Nebel aus der bzw. den Düsen durch die Zentrifugalwirkung und die Geschwindigkeit der Düse bzw. Düsen in Bezug auf einen Luftstrom, der von dem Ventilator erzeugt wird.

**15.** Verfahren nach Anspruch 14, umfassend ein Verteilen der Flüssigkeit von einer zentralen Nabe eines jeweiligen Ventilators durch Strömungswege auf oder im Inneren der Ventilatorflügel zu den Düsen.

**16.** Verfahren nach einem der Ansprüche 13 bis 15, umfassend ein Einbringen von Luft zu dem mindestens einen Ventilator mittels Eintrittsschaufeln, die umlaufend um den mindestens einen Ventilator angeordnet sind.

**17.** Verfahren nach Anspruch 16, umfassend ein Lenken eines einströmenden Luftstroms zu dem bzw. den Ventilatoren in einer Richtung gegen eine Drehrichtung des bzw. der Ventilatoren.

## Revendications

1. Système de climatisation par évaporation (10) pour refroidir de l'air, le système comprenant au moins un ventilateur (9) ayant des pales (4) et relié de manière fonctionnelle à des moyens d'entraînement (32) pour réaliser une rotation de ventilateur, au moins un trajet d'écoulement (46) pour acheminer le liquide sous pression à au moins une buse (12), l'au moins une buse déchargeant le liquide sous la forme d'une brume (36) dans un flux d'air rafraîchissant créé par les pales pendant la rotation (50) de l'au moins un ventilateur,

   l'au moins une buse (12) étant prévue à un bord de fuite d'une ou plusieurs des pales (4) du ventilateur (9) ou en aval d'un bord de fuite d'une ou plusieurs des pales (4) du ventilateur (9) par rapport à la direction de rotation de ventilateur, et un différentiel de vitesse entre la brume (36) provenant d'une ou plusieurs buses tournantes (12) par rapport au flux d'air rafraîchissant créé par les pales de l'au moins un ventilateur (9) réalisant l'évaporation de la brume (36) du liquide.

2. Système selon la revendication 1, dans lequel l'au moins un ventilateur comprend un ventilateur axial à aubes.

3. Système selon la revendication 1 ou 2, dans lequel les buses sont prévues sur les pales (4) de l'au moins un ventilateur.

4. Système selon l'une quelconque des revendications 1 à 3, dans lequel au moins une des buses est située à ou adjacente à une pointe de pale de ventilateur respective et/ou sur les pales de ventilateur dans une moitié externe d'un rayon entre un axe de rotation du ou des ventilateurs et un bord périphérique externe du ou des ventilateurs.

5. Système selon l'une quelconque des revendications précédentes, comprenant des aubes d'entrée d'air (60) pour diriger de l'air rafraîchissant/entrant sur des sorties respectives des buses.

6. Système selon la revendication 5, dans lequel les aubes d'entrée sont disposées de manière circonférentielle par rapport à un ou plusieurs ventilateurs.

7. Système selon l'une quelconque des revendications précédentes, dans lequel l'au moins un ventilateur comprend un disque ou moyeu central (11) supportant au moins une desdites buses pour émettre une brume (36) vers l'extérieur à partir du bord du disque ou moyeu lorsque l'au moins un ventilateur tourne.

8. Système selon la revendication 5 ou 6, dans lequel au moins certaines des aubes d'entrée (60) sont inclinées à l'opposé d'une direction radiale depuis un axe central du ou des ventilateurs pour diriger un flux d'air dans une direction contraire à une direction de rotation du ou des ventilateurs.

9. Système selon l'une quelconque des revendications précédentes, comprenant des trajets d'écoulement (18, 22) sur ou dans les pales de ventilateur pour distribuer le liquide aux buses.

10. Système selon l'une quelconque des revendications précédentes, comprenant un moyen d'alimentation en liquide entrant dans un moyeu de l'au moins un ventilateur depuis un côté avant, non entraîné, du ou des ventilateurs.

11. Système selon l'une quelconque des revendications 1 à 9, comprenant un moyen d'alimentation en liquide entrant dans un moyeu de l'au moins un ventilateur depuis un côté arrière, entraîné, par l'intermédiaire d'un trajet d'écoulement à l'intérieur d'un arbre ou broche.

12. Système selon la revendication 11, comprenant un moyen d'alimentation en liquide entrant, par l'intermédiaire d'un arbre de moteur creux (40) pour acheminer le liquide à des trous de dispersion de fluide (42), dans une chambre de dispersion de fluide de moyeu de ventilateur (26), distribuant à l'extérieur à travers des conduits de dispersion de fluide radiaux dans les pales de ventilateur, puis à l'extérieur à travers les buses.

13. Procédé de climatisation par évaporation par utilisation d'un écoulement de liquide mis sous pression à travers des buses (12), le procédé comprenant :

    a) faire tourner un ventilateur (9) ayant des pales (4) avec au moins une buse (12) prévue à un bord de fuite d'une ou plusieurs des pales (4) du ventilateur (9) ou en aval d'un bord de fuite d'une ou plusieurs des pales (4) du ventilateur (9) par rapport à la direction de rotation de ventilateur ;
    b) fournir du liquide sous pression à une ou plusieurs des buses (12) ;
    c) décharger le liquide à partir des buses sous la forme d'une brume (36) dans un flux d'air rafraîchissant créé par les pales (4) de l'au moins un ventilateur (9) ; et
    d) évaporer la brume (36) par l'intermédiaire d'une différence entre une vitesse de la brume déchargée à partir d'une ou plusieurs buses pendant la rotation du ventilateur (9) et une vitesse d'air du flux d'air rafraîchissant créé par les pales (4) du ventilateur (9) .

14. Procédé selon la revendication 13, comprenant :

a) disposer un conduit le long ou à travers une ou plusieurs des pales de ventilateur vers une ou plusieurs buses sur une ou plusieurs des pales de ventilateur pour acheminer du liquide à la ou aux buses ;
b) mettre sous pression, de manière centrifuge, le liquide acheminé à la ou aux buses par rotation du ventilateur ;
c) pulvériser le liquide sous la forme d'une brume à partir de la ou des buses par l'action centrifuge et la vitesse de la ou des buses par rapport à un flux d'air créé par le ventilateur.

15. Procédé selon la revendication 14, comprenant distribuer le liquide à partir d'un moyeu central d'un ventilateur respectif, à travers des trajets d'écoulement sur ou dans les pales de ventilateur, aux buses.

16. Procédé selon l'une quelconque des revendications 13 à 15, comprenant introduire de l'air dans l'au moins un ventilateur par l'intermédiaire d'aubes d'entrée disposées de manière circonférentielle autour de l'au moins un ventilateur.

17. Procédé selon la revendication 16, comprenant guider un flux d'air entrant vers le ou les ventilateurs dans une direction contraire à une direction de rotation du ou des ventilateurs.

Fig 1

EP 2 689 197 B1

Fig 2

13

Fig 3

Fig. 4a

Fig. 4b

Fig. 5a

Fig. 5b

Fig 6

Fig. 7

Fig. 8

OUTSIDE

INSIDE

Fig. 9

Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110139005 A
- US 7160469 B
- US 5395483 A
- US 5439618 A
- US 7033411 B
- US 5003789 A
- WO 02075228 A1